# EUROPEAN PATENT SPECIFICATION

(11) **EP 1 115 065 B1**
(45) Date of publication and mention of the grant of the patent: **01.09.2010**
(21) Application number: 00310901.4
(22) Date of filing: 07.12.2000
(51) Int. Cl.: G06F 13/38, G06F 13/364

(54) **Effective channel priority processing for transfer controller with hub and ports**
Wirksame Kanalprioritätverarbeitung für Übertragungssteuerung mit Knotenpunkt und Toren
Traitement de priorité de canal effectif pour contrôleur de transfert avec concentrateur et port

(30) Priority: 07.12.1999 US 169369 P
(43) Date of publication of application: 11.07.2001
(73) Proprietor: Texas Instruments Incorporated, Dallas, Texas 75251 (US)
(72) Inventor: Agarwala, Sanjive, Richardson Texas 75082 (US); Comisky, David A., Plano Texas 75075 (US); Robertson, Iain, Bedfordshire MK44 3TT (GB)
(74) Representative: Legg, Cyrus James Grahame

(56) References cited:
- US-A- 5 500 858
- US-A- 5 517 495
- US-A- 5 561 669
- US-A- 5 905 725

## Description

The technical field of this invention is digital signal processing and more particularly control of data transfers within a digital signal processing system.

Digital signal processing (DSP) differs significantly from general purpose processing performed by micro-controllers and microprocessors. One key difference is the strict requirement for real time data processing. For example, in a modem application, it is absolutely required that every sample be processed. Even losing a single data point might cause a digital signal processor application to fail. While processing data samples may still take on the model of tasking and block processing common to general purpose processing, the actual data movement within a digital signal processor system must adhere to the strict real-time requirements of the system.

As a consequence, digital signal processor systems are highly reliant on an integrated and efficient direct memory access (DMA) engine. The direct memory access controller is responsible for processing transfer requests from peripherals and the digital signal processor itself in real time. All data movement by the direct memory access must be capable of occurring without central processing unit (CPU) intervention in order to meet the real time requirements of the system. That is, because the CPU may operate in a software tasking model where scheduling of a task is not as tightly controlled as the data streams the tasks operate on require, the direct memory access engine must sustain the burden of meeting all real time data stream requirements in the system.

The early direct memory access has evolved into several successive versions of centralized transfer controllers and more recently into the transfer controller with hub and ports architecture. The transfer controller with hub and ports architecture is described in European Patent Application No. 1 046 999 entitled "Transfer Controller with Hub and Ports Architecture."

A first transfer controller module was developed for the TMS330C80 digital signal processor from Texas Instruments. The transfer controller consolidated the direct memory access function of a conventional controller along with the address generation logic required for servicing cache and long distance data transfer, also called direct external access, from four digital signal processors and a single RISC (reduced instruction set computer) processor.

The transfer controller architecture of the TMS330C80 is fundamentally different from a direct memory access in that only a single set of address generation and parameter registers is required. Prior direct memory access units required multiple sets for multiple channels. The single set of registers, however, can be utilized by all direct memory access requestors. Direct memory access requests are posted to the transfer controller via a set of encoded inputs at the periphery of the device. Additionally, each of the digital signal processors can submit requests to the transfer controller. The external encoded inputs are called "externally initiated packet transfers" (XPTs). The digital signal processor initiated transfers are referred to as "packet transfers" (PTs). The RISC processor could also submit packet transfer requests to the transfer controller.

The transfer controller with hub and ports introduced several new ideas concepts. The first was uniform pipelining. New digital signal processor devices containing a transfer controller with hub and ports architecture have multiple external ports, all of which look identical to the hub. Thus peripherals and memory may be freely interchanged without affecting the hub. The second new idea is the concept of concurrent execution of transfers. That is, up to N transfers may occur in parallel on the multiple ports of the device, where N is the number of channels in the transfer controller with hub and ports core. Each channel in the transfer controller with hub and ports core is functionally just a set of registers. This set of registers tracks the current source and destination addresses, the word counts and other parameters for the transfer. Each channel is identical, and thus the number of channels supported by the transfer controller with hub and ports is highly scalable.

Finally the transfer controller with hub and ports includes a mechanism for queuing transfers up in a dedicated queue memory. The TMS320C80 transfer controller permitted only was one transfer outstanding per processor at a time. Through the queue memory provided by the transfer controller with hub and ports, processors may issue numerous transfer requests up to the queue memory size before stalling the digital signal processor.

US-A-5 500 858 discloses a high-bandwidth input-queued switch including a rotating priority iterative matching desynchronizing scheduler which processes output device designation signals based on a rotating priority scheme. In this scheme, the input request with the highest priority is selected. Thereafter, the designation of the highest priority is incremented, causing the highest priority element of the last iteration to become the lowest priority element in the following iteration.

The invention provides a data transfer controller according to claim 1.

Preferably, said data transfer hub is capable of setting said source port priority for all ports upon completion of each data transfer request.

Preferably, the data transfer controller further comprises an internal memory, wherein at least one of said plurality of ports is connected to said internal memory.

Preferably, at least one of said plurality of ports is capable of connection to an external memory.

Preferably, at least one of said plurality of ports is adapted for connection to an external peripheral device.

The invention also provides a data processing system according to claim 6.

Preferably, the data processing system further comprises a plurality of internal memories, each of said plurality of internal memories corresponding to one of said data processors and one of said plurality of ports being connected to said plurality of internal memories.

The transfer controller with hub and ports of this invention is developed from that described in European Patent Application No. 1 046 999 "Transfer Controller with Hub and Ports Architecture" and provides effective channel priority processing.

The effective channel priority processing of this invention is the solution to the task of monitoring and arbitration of conflicting transfers that could cause major performance degradation if only the simple channel priority assigned determined which transfer should proceed first. The technique detailed here acts to raise the effective channel priority of a low priority transfer task which is blocking the completion of a higher priority transfer task.

This conflict comes about when both the lower priority channel and the higher priority channel are accessing data from the same port, but the lower priority task was initiated on an earlier processor cycle and hence is at the front of the queue for that port. Effective channel priority processing promotes the first task in the queue of a given port to the highest priority level represented by tasks on that queue.

These and other aspects of this invention are illustrated in the drawings, in which:
Figure 1 illustrates in a functional block diagram the basic principal features of the transfer controller with hub and ports and related functions;
Figure 2 illustrates the queue manager interface to the transfer controller hub unit;
Figure 3 illustrates the transfer controller pipelines;
Figure 4 illustrates the pipeline M-stage of the transfer controller, which contains the effective channel priority processing hardware;
Figure 5 illustrates processing following only the simple channel priority assigned without the effective channel priority technique;
Figure 6 illustrates processing with the effective channel priority technique acting to modify priorities.
Figure 7 illustrates in flow chart form, a sequence of effective priority updates in the process of servicing a series of transfers in queue.

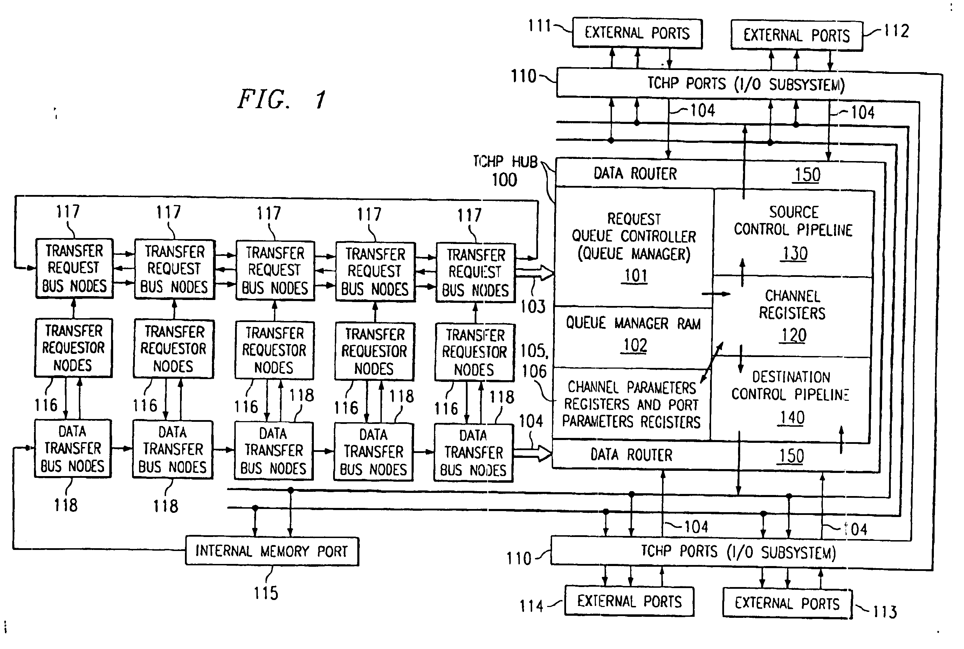

The transfer controller with hub and ports transfer controller with hub and ports architecture is optimized for efficient passage of data throughout a digital signal processor chip. Figure 1 illustrates a block diagram of the principal features of the transfer controller with hub and ports. It consists of a system of a single hub 100 and multiple ports 111 through 115.

The transfer controller with hub and ports functions in conjunction with a transfer request bus having a set of nodes 117, which bring in transfer request packets at input 103. These transfer request bus nodes individually receive transfer request packets from transfer requestors 116 which are processor-memory nodes or other on-chip functions which send and receive data.

Secondly, the transfer controller uses an additional bus, the data transfer bus having a set of nodes 118, to read or write the actual data at the requestor nodes 116. The data transfer bus carries commands, write data and read data from a special internal memory port 115 and returns read data to the transfer controller hub via the data router 150 at inputs 104.

The transfer controller has, at its front-end portion, a request queue manager 101 receiving transfer requests in the form of transfer request packets at its input 103. Request queue manager 101 prioritizes, stores and dispatches these as required.

Request queue manager 101 connects within the transfer controller hub unit 100 to the channel request registers 120 which receive the data transfer request packets and process them. In this process, request queue manager 101 first prioritizes the transfer request packets and assigns them to one of the N channel request registers 120. Each of the N channel request registers 120 represents a priority level.

If there is no channel available for direct processing of the transfer request packet, it is stored in the queue manager memory 102. Queue manager memory 102 is preferably a random access memory (RAM). The transfer request packet is then assigned at a later time when a channel becomes available. The channel registers interface with the source 130 and destination 140 control pipelines which effectively are address calculation units for source (read) and destination (write) operations.

Outputs from these pipelines are broadcast to M ports through the transfer controller ports I/O subsystem 110. I/O subsystem 110 includes a set of hub interface units, which drive the M possible external ports units. Four such external ports are shown in Figure 1 as external ports 111 through 114. The external port units (also referred to as application units) are clocked either at the main processor clock frequency or at a different external device clock frequency. The external device clock frequency may be lower than or higher than the main processor clock frequency. If a port operates at its own frequency, synchronization to the core clock is required.

As an example of read-write operations at the ports, consider a read from external port node 112 followed by a write to external port node 114. First the source pipeline addresses port 112 for a read. The data is returned to the transfer controller hub through the data router 150. On a later cycle the destination control pipeline addresses port 114 and writes the data at port 114. External ports as described here do not initiate transfer requests but merely participate in reads and writes requested elsewhere on the chip. Read and write operations involving the processor-memory (transfer requestors) nodes 116 are initiated as transfer request packets on the transfer request bus 117. The queue manager 101 processes these as described above. On a later cycle a source pipeline output (read command/ address) is generated which is passed at the internal memory port to the data transfer bus 118 in the form of a read. This command proceeds from one node to the next in pipeline fashion on the data transfer bus. When the processor node addressed is reached, the read request causes the processor-memory node to place the read data on the bus for return to the data router 150. On a later cycle, a destination pipeline output passes the corresponding write command and data to the internal memory port and on to the data transfer bus for writing at the addressed processor node.

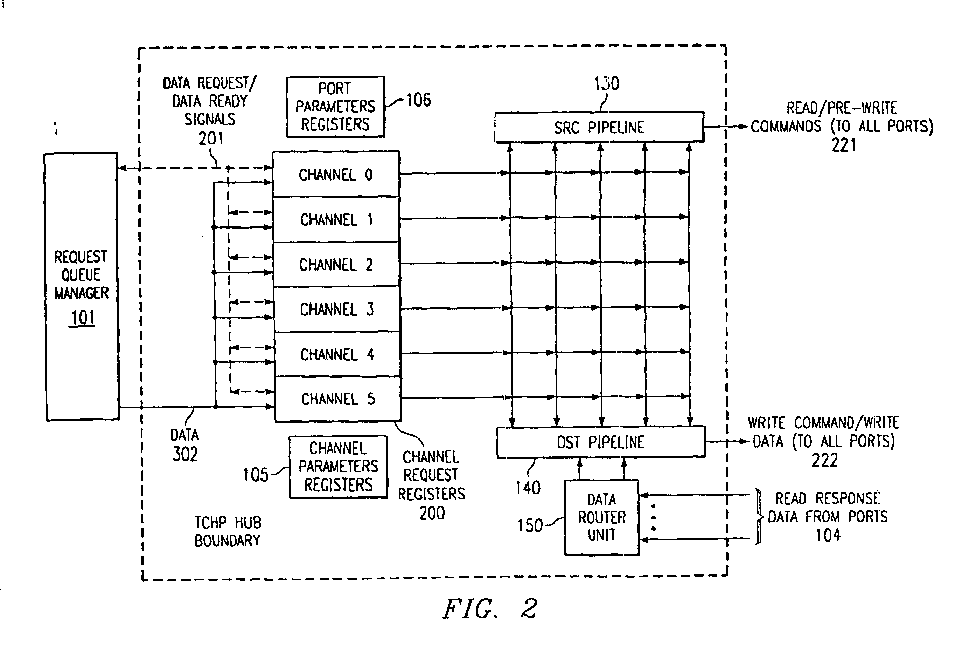

The channel parameter registers 105 and port parameter registers 106, shown in Fig. 2, hold all the necessary parametric data as well as status information for the transfer controller hub pipelines to process the given transfer. Both pipelines share some of the stored information. Other portions relate specifically to one pipeline or the other.

Figure 2 illustrates the interface of request queue manager 101 to the transfer controller hub unit boundary and particularly the request queue manager communications with the channel request registers 200, channel parameter registers 105 and port parameter registers 106. Channel parameters registers 105 and port parameters registers 106 store critical data regarding for example, types of transfers, mode information, status, and much other information critical to the transfer process.

Channel request registers 200 pass information used in the source control pipeline 130 for generation of the read/ pre-write commands 221. Similarly, channel request registers 200 pass information used in the destination control pipeline 140 for the generation of write command/ write data words 222. Read response data 104 from the ports is returned to the destination pipeline via the data router 150.

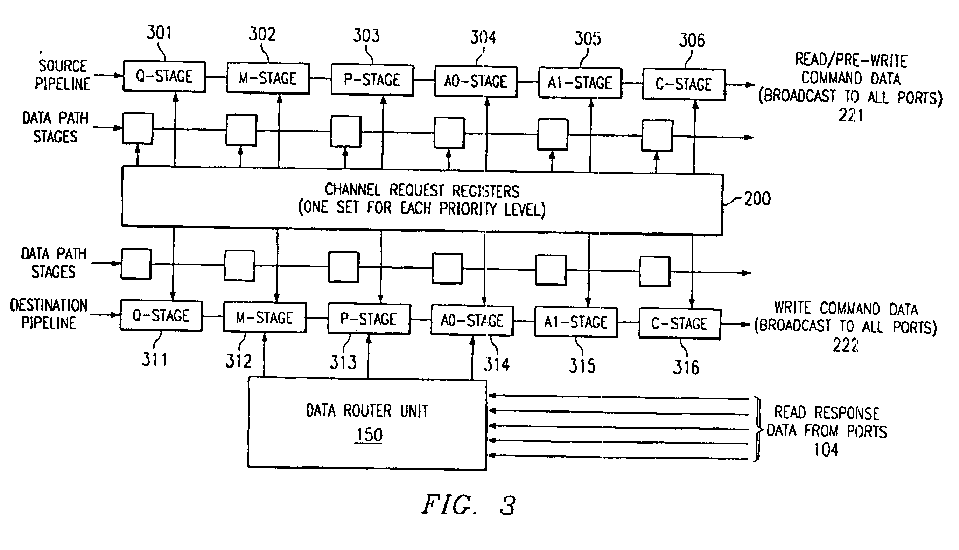

Figure 3 illustrates the possible pipelines in a transfer controller implementation. Table 1 shows the particular tasks performed during the pipeline stages in the preferred embodiment. In specific implementations, one or more stages may be combined but the tasks for the individual pipeline stages are essentially as shown in Table 1.

**Table 1**

| Pipeline Stage | Function |
|---|---|
| Q | Interrogates state of queues within ports |
| M | Maps port ready signals to channels |
| P | Prioritize highest priority channel with ready ports |
| A0 | First half of address update cycle |
| A1 | Second half of address update cycle |
| C | Issues command to ports |

The channel request registers 200 pass information used in the source pipeline stages 301 to 306 for generation of the read/prewrite commands 221. Similarly, the channel request registers 200 pass information used in the destination pipeline stages 311 to 315 for the generation of write command/write data words 222. Read response data 104 from the ports is returned to the destination pipeline via the data router 150.

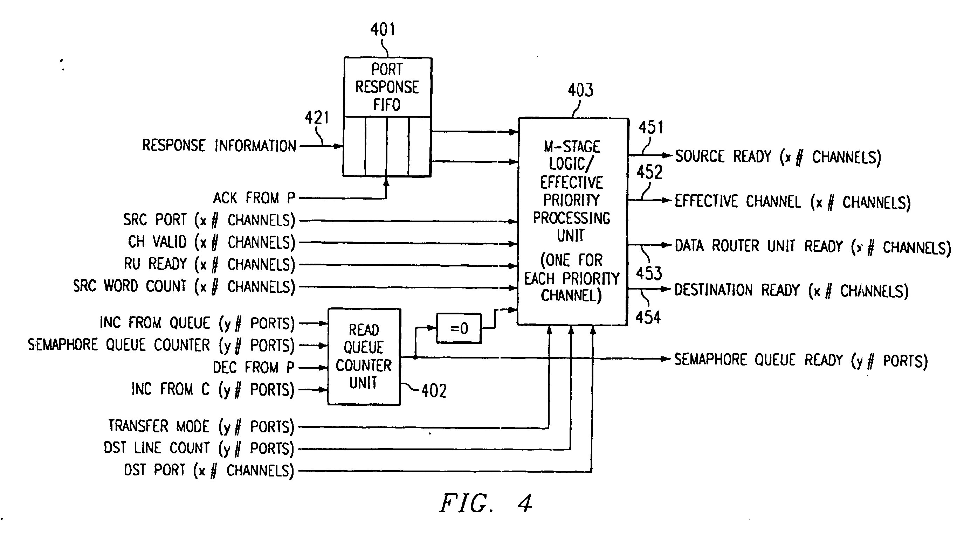

Figure 4 illustrates the pipeline M-stage. The pipeline M-stage and P-stage will play the most significant part in carrying out the effective channel priority processing technique of this invention. It is helpful to consider the make-up of the M-stage in further detail. The pipeline M-stage interfaces with the ports. These ports send response information 421 of completed reads which need to be serviced by the transfer controller. This information is then sent to the port response FIFO 401 in the pipeline M-stage, then prioritized in pipeline P-stage. The pipeline M-stage is responsible for the mapping from port to channel. Note channel related output signals 451 through 454. The pipeline P-stage evaluates if a channel is ready and prioritizes the command.

The pipeline M-stage maps the port information on a per channel basis. This is then analyzed and prioritized in the pipeline P-stage to select the channel to process further. Figure 4 illustrates the signal information that is generated for each channel from the received port information. The source ready signal 451 flags when the source port for the channel has read data ready for the transfer controller to process. The data router unit ready signal 453 similarly flags when data routing unit 150 has left over read data for the channel that needs to be processed. The destination ready signal 454 flags when the destination port for the channel has available queue space (internal memory port space). This is only taken into account for internal memory port transfer. The effective channel signal 452 is the channel number of the channel that should be effectively raised to the priority of the present channel.

There are three main components of the pipeline M-stage. The port response FIFO 401 holds the response information from the ports inside the transfer controller hub. The pipeline M-stage also includes read queue counters 402 and effective priority processing unit 403.

A multiple-cycle delay occurs between the time of a new response from a port denoting "data ready" and the time that the transfer controller hub can send a acknowledgment (ACK) back to the port signifying that the hub will process the data. In order to be able to process a new response every clock even with this multiple-cycle ACK delay, multiple-entry port response FIFO 401 is used to keep track of the last three responses from the port that have not generated an ACK signal. In port response FIFO 401, only the first response may be serviced. Because of the ACK delay, one more response may come from the port before it receives a signal that the first response could not be processed, thus stalling the port. Port response FIFO 401 advances when the pipeline M-stage and P-state respond indicating which port, if any, will receive the ACK in the next cycle.

Both the destination pipeline and the source pipeline use read queue counters 402. Locally, the counter is decremented when the port is selected for an operation in the pipeline M-stage and P-state. This counter is incremented when receiving a signal sent indicating that a queue entry was emptied.

The ports and port response FIFO 401 can only be serviced in order. Thus there is a need for the ability to raise the effective priority when the data belonging to a low priority channel is blocking a port from reading and processing the data for a higher priority channel. The functional block which handles this operation is a part of the pipeline M-Stage effective priority processing unit 403.

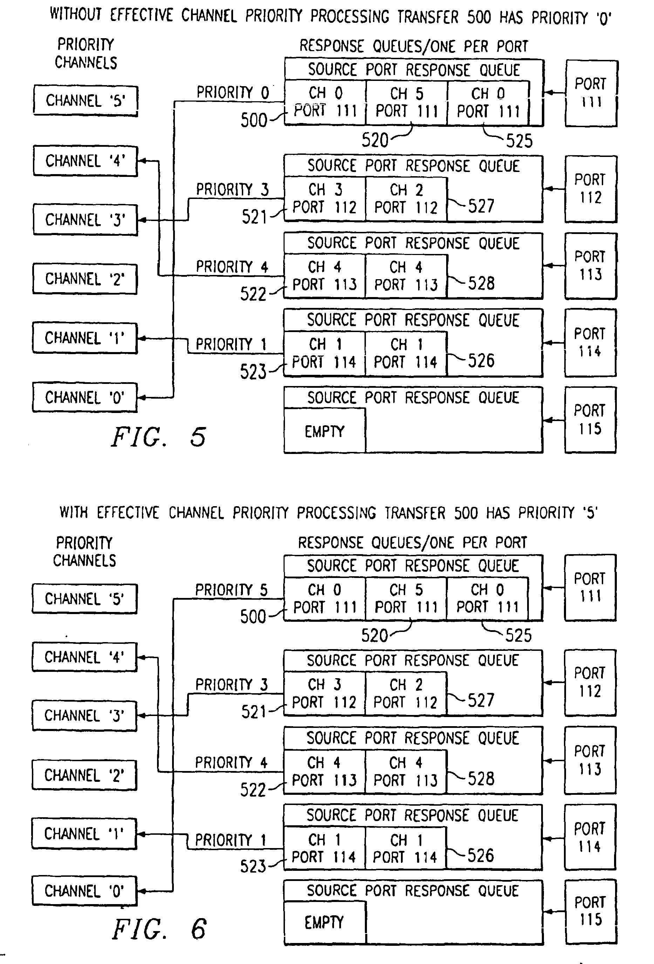

Figure 5 illustrates an example of effective priority processing. Consider a possible scenario of two transfers in queue where an arbitration of priorities can make a significant difference in processor performance. Suppose two channels (say port 5, with highest priority and port 0, with lowest priority) are using the same source port, and the data at the front of the response queue is from the lower priority channel (0). If there was no effective priority processing, such as indicated in Figure 5, then the following could happen. If other ports in the system have data available at the front of their response queues for any of the channels 4 through 1, as is the case for ports 112 through 115 in the example illustrated in Figure 5, then these other ports will get serviced ahead of the port with data for channel 0.

This is acceptable as far as channel 0 is concerned. Unfortunately this means that channel 5, which is supposed to be high priority, is actually getting low priority performance. This is because the channel 5 data transfer request 520, which is waiting to be serviced, is blocked behind channel 0 data transfer 500. The data transfers 521 through 524, which reside at the front of each respective source port response queue, are assigned the priority of that specific channel. These are each assigned a priority ahead of channel 0 data transfer 500. Thus ordinarily, channel 5 data transfer request 520 would be serviced following service of the lower priority data transfers 521 through 524. The following remedy, which allows for dynamic adjustments to the effective priority of a channel, is implemented in the improved transfer controller of this invention.

In effective channel priority processing, the source ports being used by the currently active channels are examined on a cyclic basis to determine the highest priority channel using each source port response queue. For the purposes of prioritization in the destination pipeline, all channels using a port are then assigned the priority level of the highest priority channel using that port. This priority assignment need only be revised when a channel either completes or starts a transfer. This means that several cycles can be taken to recompute the effective priority levels in order to avoid complicated multiple compares and other operations which tend to introduce speed degradation. Note that this approach does not change the order in which data is extracted from a given source port response queue. This is still a strict first-in-first-out sequence. It simply ensures that high priority data does not become inaccessible for excessive cycles behind low priority data.

Figure 6 illustrates the results of effective channel priority processing for the same example of transfers as illustrated in Figure 5. Note that data transfer 500 has been promoted to priority 5 (highest priority) because there is in that source port response queue a true priority 5 data transfer request 520 awaiting service. The other data transfers 521 through 524, which reside at the front of each respective source port response queues are now also assigned the priority of the highest priority channel transfer present in that particular source port response queue. In this example data transfers 521, 522, and 523 are the highest priority in their respective port response queues and thus no promotion takes place.

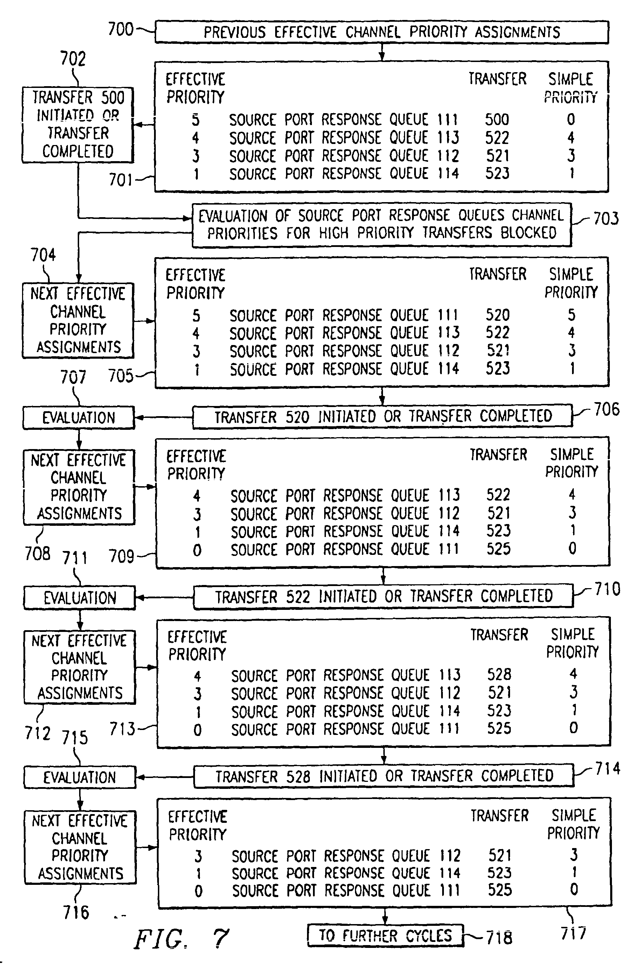

Figure 7 illustrates the result of effective channel priority processing for this particular set of example transfers in the five source port response queues. Block 700 starts with the previous effective channel priority assignments shown in detail in block 701 where simple priority is contrasted with effective priority. For example data transfer 500 is shown with simple priority "0" and effective priority level elevated to "5". Transfers 522, 521, and 523 retain their simple priorities. The result of completing transfer 500 in block 702 is that priorities are re-evaluated in block 703, and new effective priority assignments are carried out in block 704 and are shown in detail in block 705. The flow chart shows subsequent transfers completed in blocks 706, 710, and 714 for transfers 520, 522, and 528 respectively.

Because no new additional transfers are shown to have been requested during this sequence, source port response queue 113 empties after data transfer 528 in block 714. The individual blocks 705, 709, 713 and 717 show how the effective priority adjustments could result in the higher priority transfers being completed despite their place in queue behind lower priority transfers.

## Claims

1. A data transfer controller comprising:
a plurality of ports (111, 112, 113, 114, 115);
a plurality of first-in-first-out source port data transfer request queue means each corresponding to one of said plurality of ports and being capable of storing data transfer requests specifying said corresponding port as a data source;
a data transfer hub (100)connected to said plurality of ports and to said plurality of first-in-first-out source port data transfer request queue means,
said data transfer hub being capable of receiving, prioritizing and dispatching data transfer requests between ports, each data transfer request specifying a data destination,
said data transfer hub further being capable of controlling data transfer from a source port, corresponding to said data source, to a destination port, corresponding to said data destination,
**characterized in that** each data transfer request specifies a data source, a data quantity to be transferred and a priority level for the transfer,
and the data transfer hub is further capable of controlling data transfer in a quantity corresponding to said data quantity to be transferred in a currently executing data transfer request with a source port priority corresponding to said priority level,
said data transfer hub further being capable of setting said source port priority to be equal to the highest priority of any data transfer request stored in said corresponding first-in-first-out source port memory transfer request queue means.

2. The data transfer controller of claim 1, wherein said data transfer hub (100) is capable of setting said source port priority for all ports upon completion of each data transfer request.

3. The data transfer controller of claim 1 or claim 2, further comprising an internal memory, wherein at least one of said plurality of ports (115) is connected to said internal memory.

4. The data transfer controller of any one of claims 1 to 3, wherein at least one of said plurality of ports (111, 112, 113, 114) is capable of connection to an external memory.

5. The data transfer controller of any preceding claim, wherein at least one of said plurality of ports is capable of connection to an external peripheral device.

6. A data processing system comprising:
a plurality of data processors each capable of generating data transfer requests each specifying a data source, a data destination, a data quantity to be transferred and a priority level for the transfer;
and a data transfer controller of any preceding claim.

7. The data processing system of claim 6, further comprising:
a plurality of internal memories, each of said plurality of internal memories corresponding to one of said data processors and
one of said plurality of ports being connected to said plurality of internal memories.

## Patentansprüche

1. Datenübertragungssteuerung, umfassend:
eine Mehrzahl von Ports (111, 112, 113, 114, 115);
eine Mehrzahl von First-in-first-out-Quellport-Datenübertragungsanfragen-Warteschlangenmitteln, welche sich jeweils auf einen der Mehrzahl von Ports beziehen und geeignet sind, Datenübertragungsanfragen zu speichern, welche sich auf den entsprechenden Port als Datenquelle beziehen;
einen Datenübertragungs-Hub (100), welcher mit der Mehrzahl von Ports und der Mehrzahl von First-in-first-out-Quellport-Datenübertragungsanfragen-Warteschlangenmitteln verbunden ist,
wobei der Datenübertragungs-Hub geeignet ist, Datenübertragungsanfragen zwischen Ports zu empfangen, zu priorisieren und abzusenden, wobei jede Datenübertragungsanfrage einen Datenbestimmungsort nennt,
wobei der Datenübertragungs-Hub ferner geeignet ist, eine Datenübertragung von einem Quellport, welcher der Datenquelle entspricht, zu einem Bestimmungsport, welcher dem Datenbestimmungsort entspricht, zu steuern,
**dadurch gekennzeichnet, dass** jede Datenübertragungsanfrage eine Datenquelle, eine Datengröße, welche zu übertragen ist, und eine Prioritätsstufe für die Übertragung nennt,
und der Datenübertragungs-Hub ferner geeignet ist, den Datentransfer in einer Größe, welche der zu übertragenden Datengröße in einer aktuell ausgeführten Datenübertragungsanfrage entspricht, und mit einer Quellport-Priorität, welche der Prioritätsstufe entspricht, zu steuern,
wobei der Datenübertragungs-Hub ferner geeignet ist, die Quellport-Priorität gleich der höchsten Priorität jeglicher Datenübertragungsanfragen, die in dem entsprechenden First-in-first-out-Quellport-Datenübertragungsanfragen-Warteschlangenmittel gespeichert sind, zu setzen.

2. Datenübertragungssteuerung nach Anspruch 1, wobei der Datenübertragungs-Hub (100) geeignet ist, die Quellport-Priorität für alle Ports bei Beendigung einer jeden Datenübertragungsanfrage zu setzen.

3. Datenübertragungssteuerung nach Anspruch 1 oder Anspruch 2, ferner umfassend einen internen Speicher, wobei wenigstens einer der Mehrzahl von Ports (115) mit dem internen Speicher verbunden ist.

4. Datenübertragungssteuerung nach einem der Ansprüche 1 bis 3, wobei wenigstens einer der Mehrzahl von Ports (111, 112, 113, 114) für eine Verbindung mit einem externen Speicher geeignet ist.

5. Datenübertragungssteuerung nach einem der vorhergehenden Ansprüche, wobei wenigstens einer der Mehrzahl von Ports für eine Verbindung mit einem externen peripheren Gerät geeignet ist.

6. Datenverarbeitungssystem umfassend:
eine Mehrzahl von Datenverarbeitern, welche jeweils geeignet sind, Datenübertragungsanfragen zu erzeugen, welche jeweils eine Datenquelle, einen Datenbestimmungsort, eine zu übertragende Datengröße und eine Prioritätsstufe für die Übertragung nennen;
und eine Datenübertragungssteuerung nach einem der vorhergehenden Ansprüche.

7. Datenverarbeitungssystem nach Anspruch 6, ferner umfassend:
eine Mehrzahl von internen Speichern, wobei jeder der Mehrzahl von internen Speichern auf einen der Datenverarbeiter bezieht und
einer der Mehrzahl von Ports, welche mit der Mehrzahl von internen Speichern verbunden ist.

## Revendications

1. Contrôleur de transfert de données, comprenant :
une pluralité de ports (111, 112, 113, 114, 115) ;
une pluralité de moyens de mise en file d'attente de demandes de transfert de données de ports source de type premier entré, premier sorti correspondant chacun à l'un de ladite pluralité de ports et aptes à stocker des demandes de transfert de données spécifiant ledit port correspondant en qualité de source de données ;
un concentrateur de transfert de données (100) connecté à ladite pluralité de ports et à ladite pluralité de moyens de mise en file d'attente de demandes de transfert de données de ports source de type premier entré, premier sorti ;
ledit concentrateur de transfert de données étant apte à recevoir, hiérarchiser et distribuer des demandes de transfert de données entre les ports, chaque demande de transfert de données spécifiant une destination de données ;
ledit concentrateur de transfert de données étant en outre apte à commander le transfert de données depuis un port source, correspondant à ladite source de données, jusqu'à un port de destination, correspondant à ladite destination de données ;
**caractérisé en ce que** chaque demande de transfert de données spécifie une source de données, une quantité de données à transférer et un niveau de priorité pour le transfert ; et
le concentrateur de transfert de données est en outre apte à commander un transfert de données d'une quantité correspondant à ladite quantité de données à transférer au cours d'une demande de transfert de données en cours d'exécution avec une priorité de port source correspondant audit niveau de priorité ;
le concentrateur de transfert de données étant en outre apte à définir ladite priorité de port source de manière à ce qu'elle soit égale à la priorité la plus élevée d'une quelconque demande de transfert de données stockée dans lesdits moyens de mise en file d'attente de demandes de transfert de mémoire de ports source de type premier entré, premier sorti correspondants.

2. Contrôleur de transfert de données selon la revendication 1, dans lequel ledit concentrateur de transfert de données (100) est apte à définir ladite priorité de port source de tous les ports suite à l'exécution de chaque demande de transfert de données.

3. Contrôleur de transfert de données selon la revendication 1 ou 2, comprenant en outre une mémoire interne, dans lequel au moins un port de ladite pluralité de ports (115) est connecté à ladite mémoire interne.

4. Contrôleur de transfert de données selon l'une quelconque des revendications 1 à 3, dans lequel au moins un port de la pluralité de ports (111, 112, 113, 114) est apte à se connecter à une mémoire externe.

5. Contrôleur de transfert de données selon l'une quelconque des revendications précédentes, dans lequel au moins un port de ladite pluralité de ports est apte à se connecter à un dispositif périphérique externe.

6. Système de traitement de données comprenant :
une pluralité de processeurs de données, chacun étant apte à générer des demandes de transfert de données spécifiant chacune une source de données, une destination de données, une quantité de données à transférer et un niveau de priorité du transfert ; et
un contrôleur de transfert de données selon l'une quelconque des revendications précédentes.

7. Système de traitement de données selon la revendication 6, comprenant en outre :
une pluralité de mémoires internes, chaque mémoire de ladite pluralité de mémoires internes correspondant à l'un desdits processeurs de données ; et
un port de ladite pluralité de ports étant connecté à ladite pluralité de mémoires internes.
